# EUROPÄISCHE PATENTSCHRIFT

(11) **EP 1 536 969 B1**
(45) Veröffentlichungstag und Bekanntmachung des Hinweises auf die Patenterteilung: **15.07.2009**
(21) Anmeldenummer: 03747802.1
(22) Anmeldetag: 16.08.2003
(51) Int. Cl.: B60K 17/00, B60K 17/04

(54) **GETRIEBEANORDNUNG FÜR EIN KRAFTFAHRZEUG**
TRANSMISSION ARRANGEMENT FOR A MOTOR VEHICLE
ENSEMBLE DE TRANSMISSION POUR VEHICULE

(30) Priorität: 27.08.2002 DE 10240031; 03.03.2003 DE 10309067
(43) Veröffentlichungstag der Anmeldung: 08.06.2005
(73) Patentinhaber: LuK Lamellen und Kupplungsbau Beteiligungs KG, 77815 Bühl (DE)
(72) Erfinder: FRIEDMANN, Oswald, 77839 Lichtenau (DE); TENBERGE, Peter, 09123 Chemnitz (DE); REIK, Wolfgang, 77815 Bühl (DE)
(86) Internationale Anmeldenummer: PCT/DE2003/002749
(87) Internationale Veröffentlichungsnummer: WO 2004/020238

(56) Entgegenhaltungen:
- WO-A-86/01569
- CH-A- 592 259
- DE-A- 2 819 124
- DE-A- 3 038 109
- DE-A- 3 206 424
- DE-A- 3 523 761
- DE-A- 10 058 110
- DE-A- 10 113 300
- DE-A- 19 933 499
- FR-A- 876 139
- GB-A- 2 213 227
- US-A- 5 106 352

## Beschreibung

Die Erfindung bezieht sich auf Getriebeanordnungen für Kraftfahrzeuge, wobei das Motor-Moment in ein Radachsen-Moment und die Motor-Drehzahl in eine Radachsen-Drehzahl umgewandelt wird und im Antriebsstrang Schaltstufen, Drehmoment-Wandler, Planeten-Radsätze, Torsionsdämpfer, Kupplungen und E-Maschinen vorgesehen sein können.

Das Parallel-Schalt-Getriebe (abgekürzt PSG) - mit einem Doppelkupplungsgetriebe und der trockenen Doppelkupplung - ist eine funktionell vollwertige Alternative zum bekannten Wandlerautomaten in Planetenbauweise. Durch den Einsatz trockener Kupplungen im PSG kann auf die sonst erforderliche Ölpumpe verzichtet werden, wodurch ein hervorragender Gesamtwirkungsgrad beim PSG erzielt wird.

Hydraulisch betätigte Kupplungen und Bremsen zur Steuerung der Gangstufen sind aus der DE-OS 30 38 109, der CH 592 259 A5 und FR-PS 876 139 bekannt. Die DE-OS 28 19 124 offenbart ein mittels Druckluft betätigtes Planetengetriebe. Die DE 199 33 499 A1 offenbart ein automatisiertes, synchronisiertes H-Schaltgetriebe, dessen Wähl- und Schaltfunktion mittels einer Kombination aus einem Elektromotor und einem Elektromagneten erfolgt. Die GB 2 213 227 A offenbart einen hydraulisch betätigten Schaltautomaten mit einem Drehmomentwandler, bei dem Nasskupplungen und -bremsen mittels eines Elektromotors betätigt werden. Die gattungsbildende DE 101 13 300 A1 offenbart einen Schaltstufenautomaten mit einem Drehmomentwandler und Überbrückungskupplung, bei dem Lamellenkupplungen und -bremsen elektromotorisch betätigt werden. Ein Hinweis auf die Verwendung des Getriebes mit Trockenkupplung ist enthalten.

Es besteht die Aufgabe, Planetengetriebe mit trockenen Kupplungen bzw. Bremsen als Schaltelemente zu kombinieren, um die Wirkungsgradvorteile der trockenen Kupplungen mit dem bewährten und einfachen Aufbau von Planetengetrieben zu kombinieren.

Die Getriebestrukturen sollen entsprechend dem Stand der Technik mindestens über 6 Vorwärts und einen Rückwärtsgang verfügen. Um die thermische Belastung der trockenen Anfahrelemente zu minimieren sind sogar 7-Gang-Strukturen anzustreben.

Im folgenden soll die Erfindung anhand der Figuren näher erläutert werden. Es zeigen:
- Figur 1: eine Getriebe-Struktur nach Lepelletier mit einem Drehmomentwandler;
- Figur 2: eine Getriebestruktur mit einem Trockenraum zwischen zwei Ölräumen;
- Figur 3: ein Schaltzustandsdiagramm zu Figur 2;
- Figur 4: eine Getriebestruktur mit einem Startergenerator;
- Figur 5: eine Getriebestruktur mit einer Doppelkupplung und einem Trockenraum zwischen zwei Ölräumen;
- Figur 6: ein Schaltzustandsdiagramm zu Figur 5;

- Figur 7: eine Getriebestruktur mit einer Doppelkupplung, zwei getrennten Ölräumen und einem Startergenerator;
- Figur 8: eine Getriebestruktur mit nur einem Ölraum;
- Figur 9: ein Schaltzustandsdiagramm zu Figur 8;
- Figur 10: eine konstruktive Ausgestaltung der Getriebestruktur von Figur 8;
- Figur 11: einen Ausschnitt aus der Figur 10.

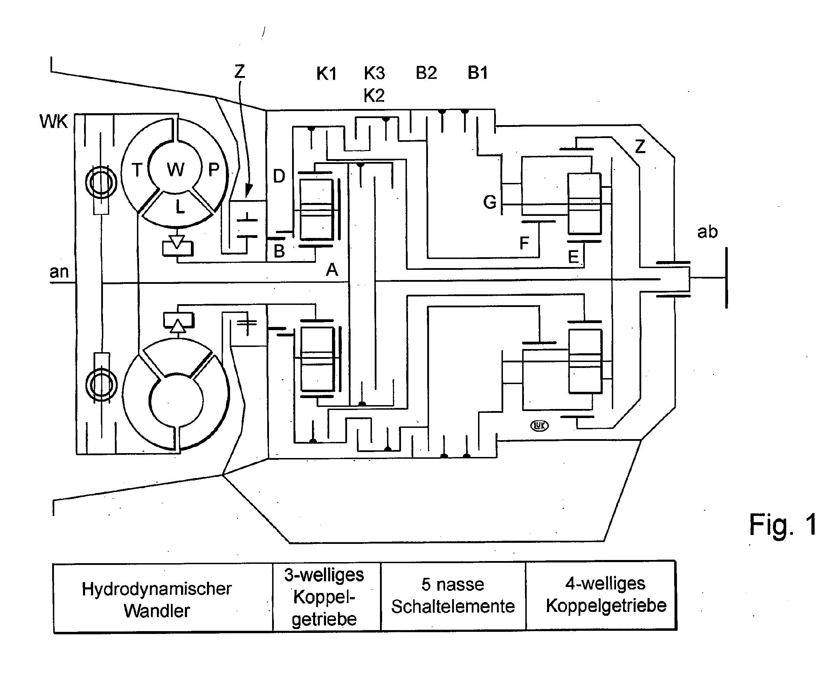

In der Figur 1 ist eine 6-Gang Automatik-Getriebe-Struktur nach Lepelletier zu sehen. In dem Wandler W - gekennzeichnet durch seine Hauptbauteile Pumpe P, Turbine T und Leitrad L - ist zusätzlich eine Wandlerüberbrückungskupplung WK angeordnet. Der Radsatz besteht aus einer eingangsseitigen Planetenstufe (3-welliges Koppelgetriebe) und einem ausgangsseitigen Ravigneaux-Satz (4-welliges Koppelgetriebe). Dazwischen sind fünf nasslaufende Kupplungen bzw. Bremsen angeordnet. Die Figur 1 entspricht dem Stand der Technik. Der Kerngedanke beim Übergang von Naßkupplungen zu Trockenkupplungen ist, dass man das Getriebe in möglichst wenige Öl- und Trockenräume unterteilt. In den Ölräumen befinden sich die Zahnräder, die vorzugsweise durch eine Planschschmierung geschmiert werden. In den Trockenräumen befinden sich die trockenen Kupplungen bzw. Bremsen und - zumindest zum Teil - Teile des zugehörenden, betreffenden Betätigungssystems. Mit K1 bis K3 werden hierbei Kupplungen 1 bis 3, bezeichnet, während mit B1 und B2, Bremsen 1 und 2 bezeichnet werden. Wird also mindestens eine der Kupplungen K1 bis K3 oder eine der Getriebe-Bremsen B1 oder B2 trocken betrieben, so stellt die Figur 1 eine neue Getriebeanordnung dar. Wird mindestens eine Kupplung oder eine Bremse trocken betrieben, so reduziert sich die benötigte Druck-Ölmenge, die durch eine Ölpumpe Z (ggf. als Zahnradpumpe ausgebildet) gefördert werden muß. Dadurch reduziert sich auch der Energiebedarf der Getriebeanordnung, wodurch sich zugleich der Wirkungsgrad der Getriebeanordnung erhöht.

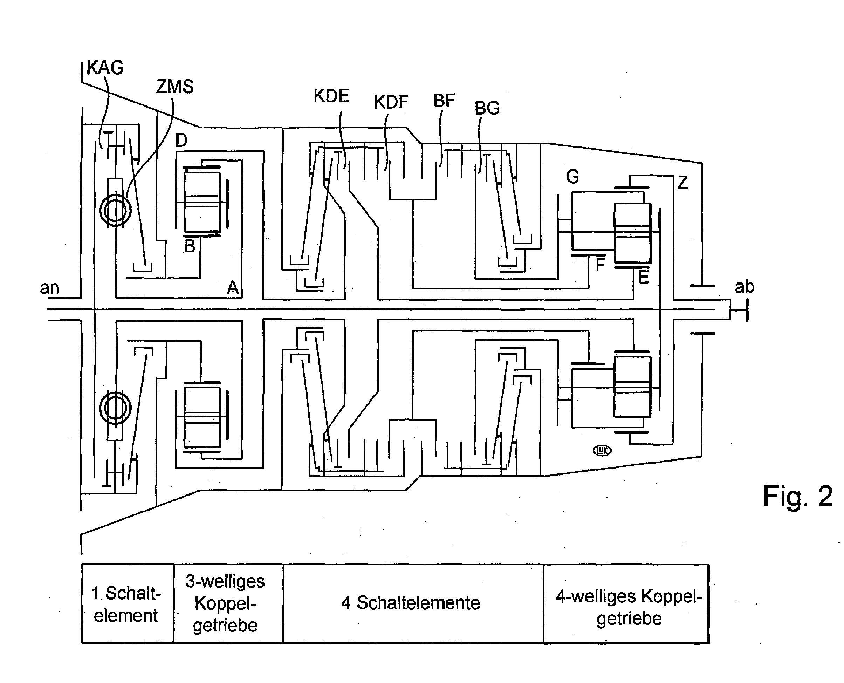

In einem weiteren Lösungsvorschlag (Figur 2) ist das Getriebe durch einen Trockenraum (4 Schaltelemente) zwischen zwei Ölräumen gekennzeichnet, in dem eine Doppelkupplung (KDE, KDF) und eine Doppelbremse (BF, BG) untergebracht ist. Die Bezeichnung KDE steht hierbei für eine Kupplung, die den D- und dem E-Strang miteinander verbindet. Entsprechendes gilt für die Kupplungsstellung, in der sie den D- und den F-Strang miteinander verbindet (= KDF). Die Bezeichnung BF steht für die Bremse B, die den F-Strang bremst. Entsprechendes steht für die Bezeichnung BG. Links in der Figur 2 weist die Bezeichnung KAG darauf hin, dass die dort dargestellte Kupplung K im geschlossenen Zustand den Strang A mit dem Strang G verbindet.

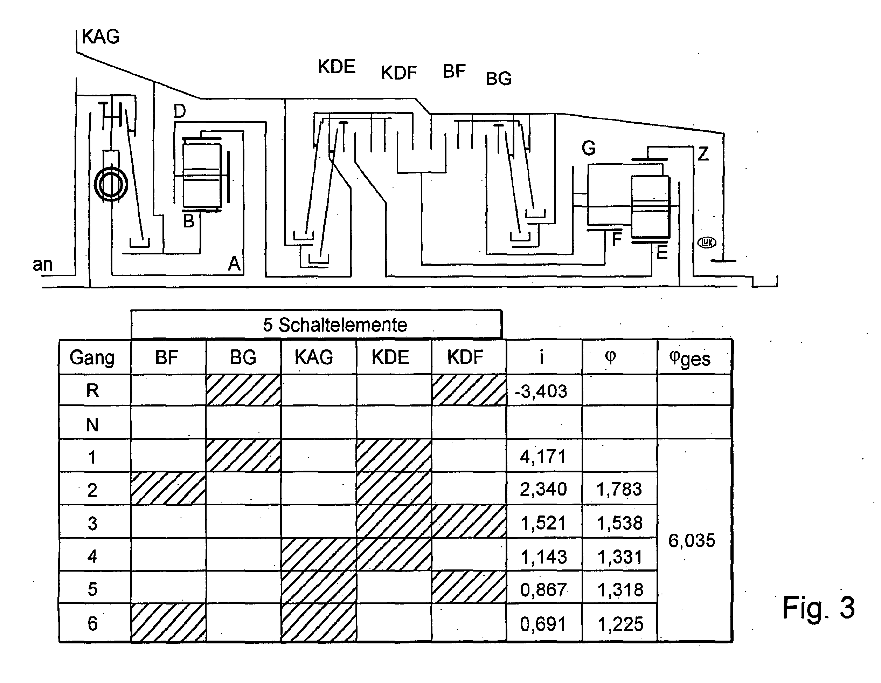

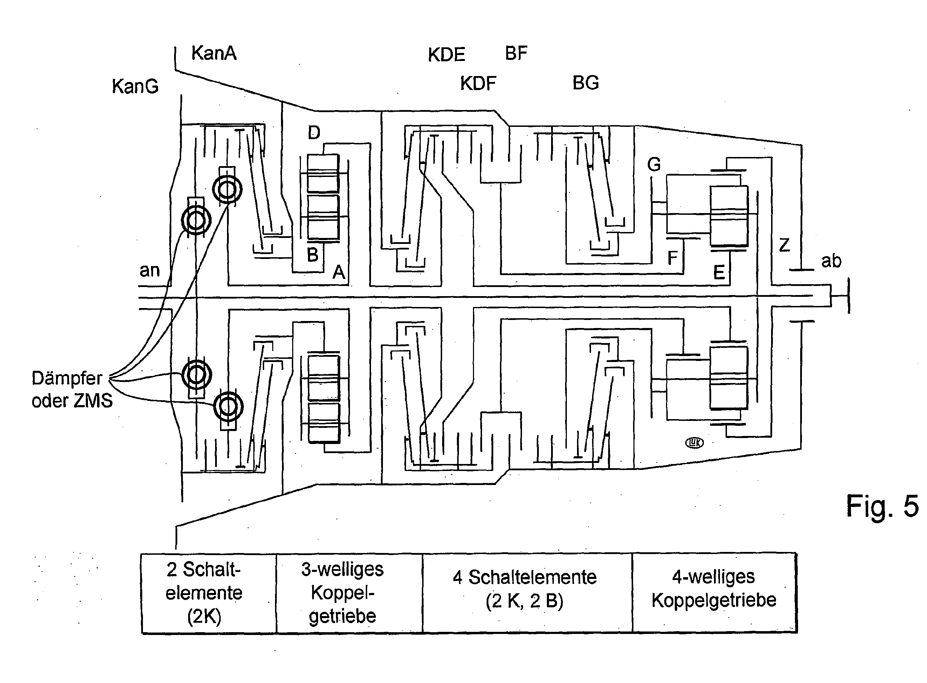

Die Doppelkupplung (KDE, KDF) verbindet die Sonnenräder des abtriebsseitigen Ravigneaux-Satzes mit dem Abtrieb (Planetenträger) der eingangsseitigen Planetenstufe. Die Zusammenfassung der beiden Kupplungen in einer Doppelkupplung ermöglicht eine kompakte und einfache Bauweise. Gleiches gilt für die Doppel-Bremse (BF, BG). Hinzu kommt zwischen Motor und Getriebe eine einfache Kupplung mit einem Torsionsschwingungsdämpfer (der auch als Zweimassen-Schwungrad (ZMS) ausgebildet sein kann; siehe auch in der Figur 5), die wie bei einem Automatisierten Schaltgetriebe (ASG) ausgeführt sein kann. Die Gangabstufung und das Schaltschema der Kupplungen und Bremsen ist der Figur 3 zu entnehmen. Der obere Teil der Figur 3 gibt noch einmal den schematischen Aufbau (hier nur der obere Teil) der Figur 2 wieder.

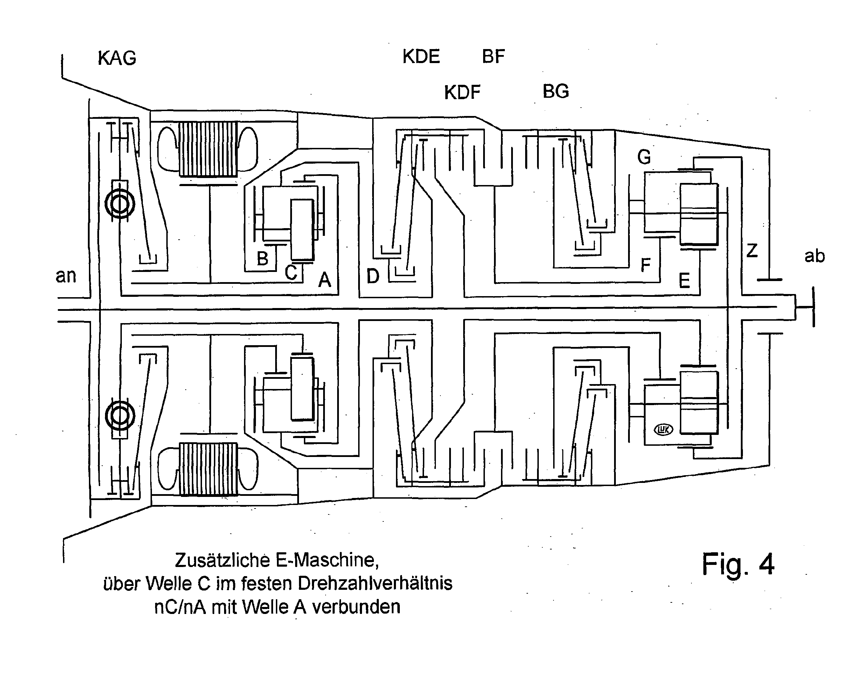

Die Figur 4 zeigt, wie man in dieses Getriebe um eine E-Maschine als StarterGenerator erweitern kann. Ein Startergenerator ist vorteilhaft, weil er den Verbrauch eines Fahrzeuges - insbesondere eines Kraftfahrzeuges - weiter reduziert. Durch diese E-Maschine wird im festen Übersetzungsverhältnis an die eingangsseitige Planetenstufe angebunden. Gegenüber einem reinen Kurbelwellen-Startergenerator hat das den Vorteil, dass für den Kaltstart weniger Moment benötigt wird (weil die Übersetzung mithilft), was die Dimensionierung des E-Maschine erleichtert. Mit anderen Worten: durch die Übersetzung kann der Kurbelwellen-Startergenerator kleiner ausfallen.

Die Getriebe-Varianten der Figuren 2/3 bzw. 4 lassen sich noch weiter verbessern: Mit nur 6 Gängen läßt sich die Anfahrübersetzung nicht beliebig vergrößern, denn sonst werden die Gangsprünge zu groß. Ein 7. Gang wäre also wünschenswert. Des weiteren bietet die Struktur mit der E-Maschine nicht die Möglichkeit, in den Bremsphasen den Verbrennungsmotor abzukoppeln. Damit kann das Verbrauchssenkungspotenzial nicht optimal ausgenutzt werden.

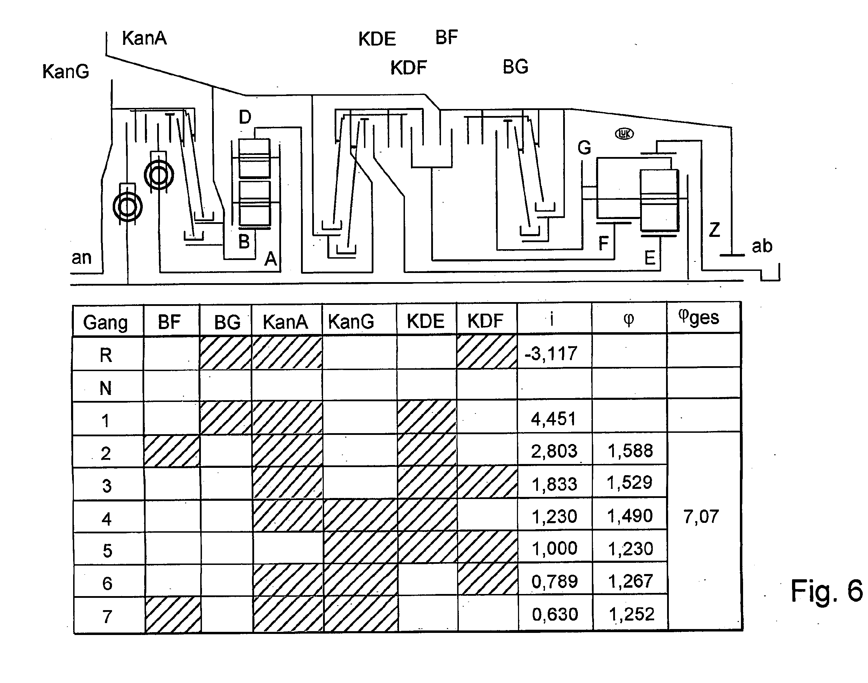

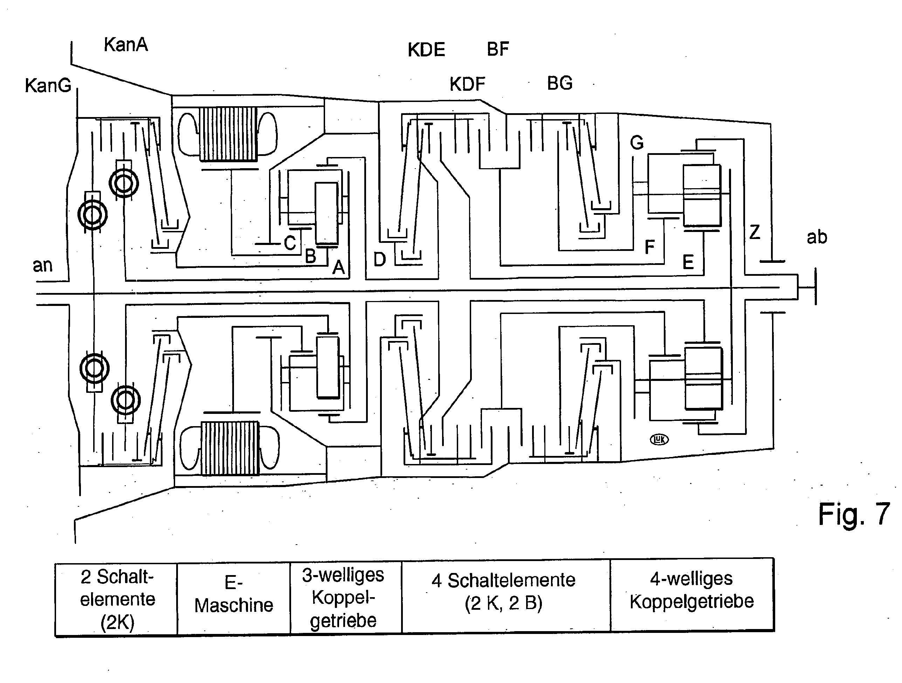

Figur 5 zeigt nun zunächst das 7-Gang-Getriebe ohne E-Maschine. Das Hauptmerkmal, der zwischen zwei Ölräumen eingeschlossene Trockenraum mit einer Doppelkupplung und einer Doppelbremse, bleibt erhalten. Die Bezeichnungen KanG und KanA bezeichnen die Wirkstellungen der Doppelkupplung K an den Strang G bzw. an den Strang A. Dieser Sprachgebrauch gilt auch gilt auch für die Figuren 6 und 7. Zwischen Motor und Getriebe befindet sich jetzt ein zweiter Trockenraum mit einer weiteren Doppelkupplung. Der Planetenträger der eingangsseitigen Planetenstufe kann über die weitere Kupplung wahlweise an den Verbrennungsmotor angekoppelt oder auch ganz abgekoppelt werden. In diesem Merkmal unterscheidet sich diese Struktur von den 6-Gang-Automaten nach Lepelletier, wo immer eine Welle der eingangsseitigen Planetenstufe an der Kurbelwelle angekoppelt ist. Die Schwingungsisolation im Antriebsstrang kann jetzt durch Schlupfregelung in der eingangsseitigen Doppelkupplung (in Verbindung mit den dargestellten Dämpfern in den Kupplungsscheiben) oder mit einem ZMS zwischen Motor und Getriebe realisiert werden.

Die Figur 6 zeigt das Schaltschema für diese Getriebevariante (= Fig. 5) und die Übersetzungen. Dabei fällt ein weiteres Unterscheidungsmerkmal zum 6-Gang-Automaten nach Lepelletier auf: Dieses Getriebe besitzt mit dem 5.Gang einen direkten Gang, der, weil direkt, einen besonders guten Wirkungsgrad aufweist.

Die Variante in der Figur 7 ist diese Getriebestruktur, aber um eine als StarterGenerator wirkende E-Maschine erweitert. Die E-Maschine wird mit einem festen Übersetzungsverhältnis an die eingangsseitige Planetenstufe angekoppelt, hier an die Planeten. Für diese Struktur bringt die zusätzliche Kupplung den weiteren Vorteil mit sich, dass nun auch die E-Maschine vom Verbrennungsmotor abgekoppelt werden kann. Somit sind ein Abschalten des Verbrennungsmotors in Rekuperationsphasen, sowie ein rein elektrisches Fahren möglich.

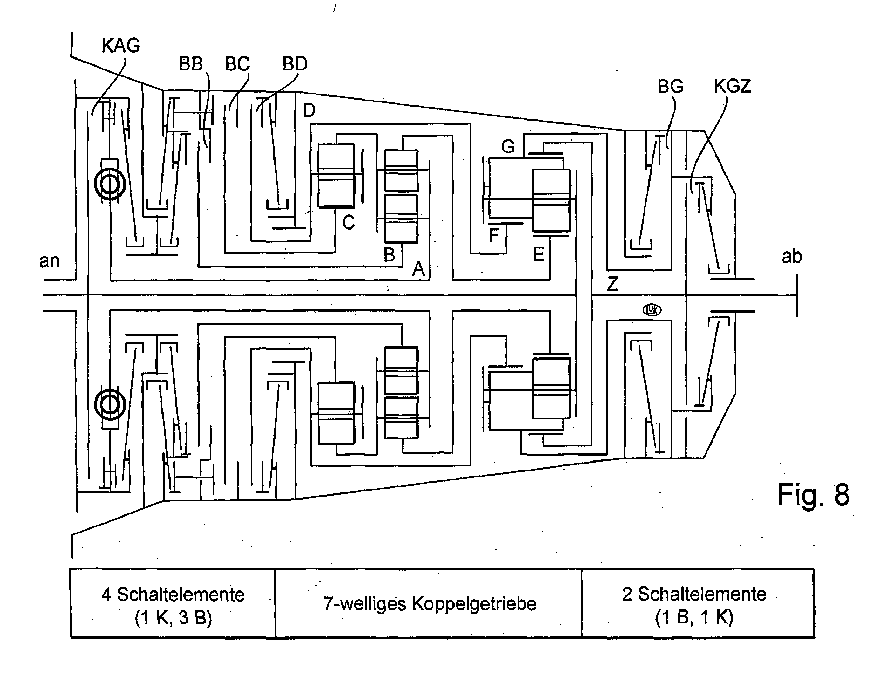

Die Strukturvariante eines Kraftfahrzeug-Getriebes in der Figur 8 ist ebenfalls ein 7-Gang Getriebe, welches aus der 6-Gang-Variante der Figur 2 bzw. 3 abgeleitet worden ist. Dabei war es ein weiteres Ziel, die beiden Ölräume zusammenzufassen, um das Gehäuse zu vereinfachen und die Zahl der benötigten Dichtungen zu minimieren. Um dieses Ziel zu erreichen ist die Einführung einer weiteren Planetenstufe notwendig. Somit ergibt sich im mittleren Ölraum ein 7-welliges Koppelgetriebe mit zwei einfacheren Planetenstufen (Einfach- und Doppel-Planetenstufe) und einem Ravigneaux-Satz. Besonders vorteilhaft bei dieser 7-Gang-Getriebestruktur ist, dass 4 der Schaltelemente Bremsen und nur 2 Kupplungen ( KAG, KGZ) sind. Bremsen (hier BB, BC, BD, BG) zeichnen sich - im Gegensatz zu Kupplungen - dadurch aus, dass ein reibendes Teil gehäusefest ist und dadurch nicht rotiert, während das weitere reibende Teil nahe dem Außendurchmesser angepresst werden kann, wodurch Bremsen viel einfacher betätigt werden können, weil sie kein zur Getriebewelle konzentrisches Ausrücklager und keine Mechanik vom Ausrücklager zum Presselement brauchen. Bremsen haben im Rahmen dieser Erfindung als erste Buchstaben immer ein "B" und weiterhin nur einen Zusatzbuchstaben, der die Verbindung zu dem gebremsten Teil angibt (z.B. C; insgesamt also BC). Da bei einer Bremse immer eine Wirkverbindung zum Gehäuse geschaffen wird, ist ein dritter Buchstabe zur Kennzeichnung dieses Kraftflusses nicht erforderlich.

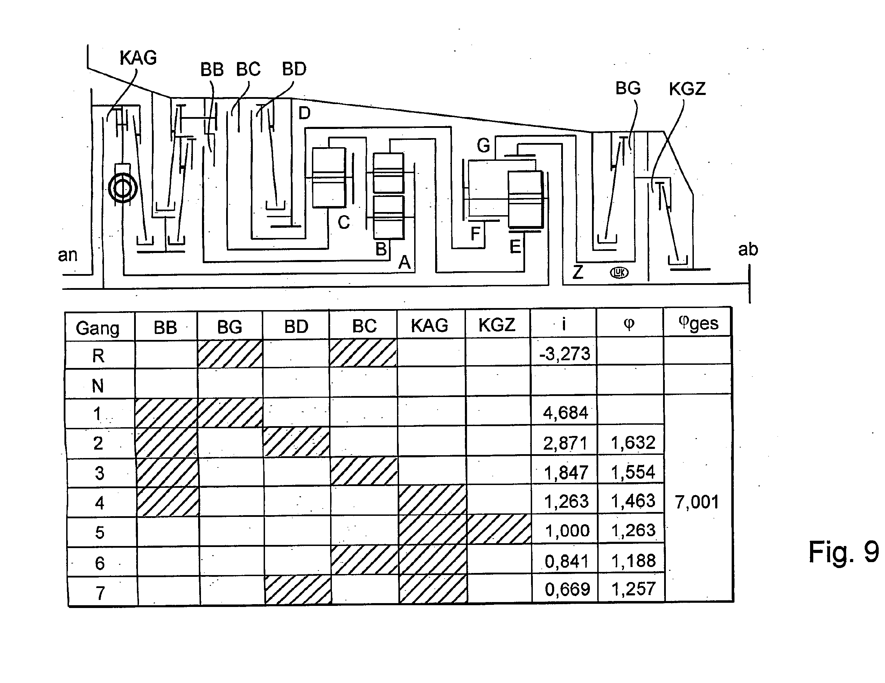

Der obere Teil der Figur 9 zeigt die obere Hälfte der Figur 8 und ist damit eine Wiederholung. In der unteren Hälfte der Figur 9 wird wiederum eine Art Schaltzustandstabelle über die Zuordnung der Gänge zu den zu betätigenden Kupplungen und Bremsen. Die Spalte i gibt die Übersetzungen innerhalb des Getriebes an. Die zusätzliche Übersetzung durch ein Differential ist in der Zahl i nicht berücksichtigt. Mit ϕ wird das Übersetzungs-Verhältnis zum nächst niedrigeren Gang angegeben. Das negative Vorzeichen für den Rückwärtsgang soll die umgekehrte Drehrichtung symbolisieren. Der Zahlenwert (ϕ_{ges} gibt das Verhältnis der Übersetzung des 1. Ganges zum 7. Gang an. Dieses Verhältnis wird auch Spreizung genannt.

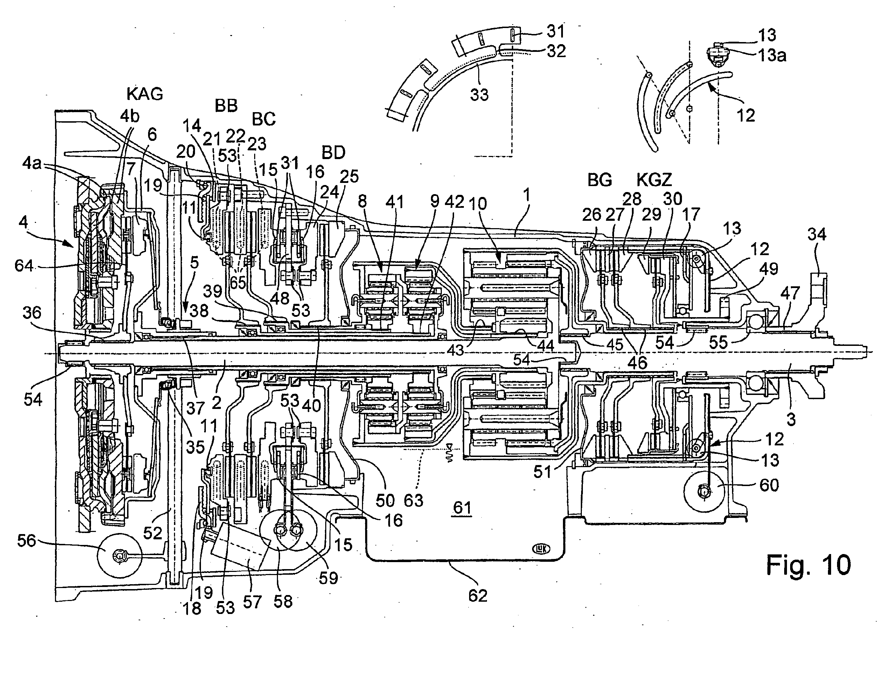

In der Schaltzustandstabelle der Figur 9 fällt auf, dass die Kupplung KAG gar nicht für das Anfahren im ersten Gang oder für den Rückwärtsgang benötigt wird, sondern dass die Kupplung KAG lediglich für die Gänge 4 bis 7 verwendet wird. Da das Zweimassenschwungrad (ZMS) aus zwei Hälften besteht (nämlich der Primär- und der Sekundärseite) besteht und der Kupplungsdeckel der Kupplung KAG an der Sekundärseite des ZMS' angebracht ist, besteht ständig eine Verbindung mit dem A-Strang des Getriebes. Über Dämpfungsfedern zwischen dem Primär- und dem Sekundärteil ist der A-Strang (in Figur 10 die innerste Hohlwelle) dann auch ständig mit der Primärseite - und damit mit dem Verbrennungsmotor - verbunden. Ist die Kupplung KAG geschlossen, so erfolgt zusätzlich ein Kraftfluss von der Sekundärseite in die Zentralwelle 2 (siehe Figur 10).

Obwohl das Bauteil KAG nicht für den ersten Gang oder den Rückwärtsgang benötigt wird, ist dennoch die Bezeichnung "Kupplung" gerechtfertigt, weil eine Kupplung zwei drehende Teile miteinander verbindet. Im Gegensatz dazu ist - wie oben schon ausgeführt - bei den hier dargestellten Bremsen BB, BC, BD und BG jeweils eine der Reibflächen mit dem Gehäuse des Getriebes verbunden und damit drehfest. Wegen den vorausgegangenen Definitionen ist demzufolge das Bauteil KGZ ebenfalls eine Kupplung. Nach dem bisherigen Verständnis vieler Fachleute ist immer dasjenige Bauteil, mit dem ein Antriebsstrang für das Anfahren im ersten Gang oder im Rückwärtsgang geschlossen wird, eine Kupplung. Durch den Sprachgebrauch der Erfindung ist also gegebenenfalls eine neue Orientierung von Begriffen und Vorstellungen - auch unter Fachleuten - notwendig.

Im Weiteren soll hier in der Verbindung mit der Figur 9 nur auf einige Wähl- bzw. Gangstellungen eingegangen werden. Der Tabelle kann hier z. B. entnommen werden, dass -für ein Anfahren im Rückwärtsgang die Bremsen BG und BC geschlossen werden müssen. Für das Anfahren im ersten Vorwärtsgang müssen die Bremsen BB und BG geschlossen werden. Mit anderen Worten: Um anzufahren - sei es vorwärts oder rückwärts - muss im Getriebe gebremst werden. Ein anderer, besonderer Schaltzustand ist mit dem Gang 5 gegeben. Durch die angegebene Übersetzung i von 1,00 wird deutlich, dass die Motordrehzahl ohne Veränderung das Getriebe verlässt. Für diese Situation ist keine der Bremsen betätigt, sondern es sind lediglich die beiden Kupplungen KAG und KGZ geschlossen.

Mit der Figur 10 wird eine mögliche Ausgestaltung der Getriebeanordnung aus den Figuren 8 und 9 gezeigt. Der Figurenbeschreibung soll vorausgeschickt werden, dass Umfangslinien der rotationssymmetrischen Teile in dieser Darstellung bewusst weggelassen wurden, um die Übersichtlichkeit im wesentlichen zu gewährleisten.

In einem Gehäuse 1 erstrecken sich in dessen Längsachse hintereinander angeordnet eine Zentralwelle 2 und eine Ausgangswelle 3. Die Ausgangswelle 3 endet im wesentlichen in einem Abtriebsflansch 34. Die Ausgangswelle ist mittels eines Kugellagers 55 und einem Nadellager 54 gelagert. Da das Nadellager 54 in einem Einstich der Ausgangswelle 3 platziert ist, muss es zweiteilig ausgeführt werden. Mit anderen Worten: Das Nadellager 54 besteht aus mindestens zwei Halbschalen, dadurch lässt es sich in dem Einstich der Ausgangswelle 3 anbringen. Das linke Ende der Ausgangswelle 3 ist mit einer Sackbohrung versehen, in der das rechte Ende der Zentralwelle 2 mittels eines Nadellagers 54 gelagert ist. Diese Lagerung ist erforderlich, weil es - außer in dem fünften Vorwärtsgang - hier immer zur Relativdrehbewegung zwischen den beiden Wellen kommt. Das linke Ende der Zentralwelle 2 wird ebenfalls mittels eines Nadellagers 54 geführt. Dieses Nadellager befindet sich jedoch in einer Ausnehmung eines hier nicht dargestellten Schwungrades oder einer nicht dargestellten Kurbelwelle. Aus dem bisher skizzierten Aufbau einer erfindungsgemäßen Getriebeanordnung entsteht der Eindruck, dass sie instabil sein könnte, weil vor Montage des Getriebes mit dem Verbrennungsmotor das linke Ende der Zentralwelle 2 nicht geführt wird. Im späteren Verlauf dieser Beschreibung wird jedoch darauf eingegangen, dass ebenfalls durch erfindungsgemäße Gedanken, diese Stabilität dennoch gegeben ist.

An dem linken Ende der Zentralwelle 2 greifen auch das Zweimassenschwungrad 4 und die Kupplung KAG an. Das Zweimassenschwungrad besteht aus einer Primärmasse 4a, die mit der Schwungscheibe des Verbrennungsmotors verschraubt ist. Über ein innenliegendes Federdämpfungssystem ist die Primärmasse 4a mit der Sekundärmasse 4b verbunden. Da die Kupplung KAG über ihren Kupplungsdeckel 6 mittels eines Vielzahnprofils mit einer ersten Hohlwelle drehfest verbunden ist, wird auch bei einer geöffneten Kupplung KAG eine Dämpfung der Torsionsschwingungen erzielt. Ist die Kupplung KAG geschlossen - d. h. die Druckplatte 7 drückt auf die Kupplungsscheibe 64 - so ist zusätzlich ein Kraftfluss über die Kupplungsscheibe 64 mittels des Vielzahnprofils 36 in die Zentralwelle 2 geschaffen. Das Schließen und Öffnen der Kupplung KAG erfolgt in diesem Ausführungsbeispiel mittels eines Ausrücksystems 5, welches im wesentlichen aus einer in dem Lagergehäuse 1 gelagerten Schwenkachse 52, einen Stellmotor 56 mit Schneckengetriebe und einem Exzenter besteht. Dieser Exzenter drückt auf eine Schiebehülse, auf der wiederum ein Ausrücklager 35 angeordnet ist.

Wenn man jetzt in der Betrachtung der Figur 10 weiter nach rechts geht, so werden neben der schon erwähnten ersten, inneren Hohlwelle, weitere übereinander angeordnete Hohlwellen gezeigt. Die Hohlwellen sind jeweils - zumindest an einem Ende - mit einem Wälzlager ausgestattet. Das andere Ende dieser Hohlwellen kann mit einer reinen Gleitlagerung versehen sein.

Zunächst soll aber erst einmal ein gedanklicher Sprung in der Betrachtung der Getriebeanordnung von links nach rechts vollzogen werden. In der Mitte des Gehäuses 1 fallen insgesamt drei Planetengetriebe bzw. Planetensätze auf. Das linke Planetengetriebe 8 ist ein sogenanntes einfaches Planetengetriebe, d. h. dass um das innenliegende Sonnenrad herum mindestens ein Planetenrad angeordnet ist und dieses wiederum in ein außenliegendes Hohlrad eingreift. Das innenliegende Sonnenrad ist mittels eines Vielzahnprofils 41 mit einer Hohlwelle verbunden. Rechts daneben befindet sich ein sogenanntes Doppelplanetengetriebe 9. Bei dem Doppelplanetengetriebe 9 ist das Sonnenrad mittels eines Vielzahnprofils 42 mit einer Hohlwelle verbunden. Mindestens ein Planetenrad greift in das Sonnenrad ein aber nicht in das dazu gehörende Hohlrad. Bei einem Doppelplanetengetriebe im Sinne der Erfindung kämmt dieses bereits erwähnte Planetenrad mit einem - zur Bildebene versetzten - weiteren Planetenrad. Dieses weitere Planetenrad ist dann erst im Eingriff mit dem Hohlrad.

Rechts neben dem Doppelplanetengetriebe 9 befindet sich ein Ravigneaux-Planetengetriebe 10. Ohne auf die Einzelheiten des an sich bekannten Ravigneaux-Planetengetriebes weiter einzugehen, soll dennoch erwähnt werden, dass ein Ravigneaux-Planetengetriebe mit zwei Sonnenrädern ausgestattet ist, die unterschiedliche Durchmesser aufweisen. Die Sonnenräder sind hier mittels der Vielzahnprofile 43 und 44 mit schalen- oder topfförmigen Drehmomentträgern verbunden.

Im folgenden soll auf die Anordnung der verschiedenen Drehmomentträger und der Kopplung der Planetengetriebe 8, 9, 10 eingegangen werden. Der Planetenträger des einfachen Planetengetriebes 8 ist mit der äußeren Hohlwelle mittels eines Vielzahnprofils 40 mit der Bremsscheibe der Bremse BD verbunden. Dieser Planetenträger ist wiederum drehfest mit einem schalenförmigen Drehmomentträger verbunden, der wiederum mittels des Vielzahnprofils 43 mit dem größeren Sonnenrad des Ravigneaux-Planetengetriebes verbunden ist. Das Hohlrad des einfachen Planetengetriebes 8 ist ebenfalls mittels eines Drehmomentträgers mit dem Planetenträger des Doppelplanetengetriebes 9 verbunden. Das Sonnenrad des einfachen Planetengetriebes 8 ist mittels des Vielzahnprofils 41 mit einer Hohlwelle verbunden, die wiederum mittels eines Vielzahnprofils 39 mit der Bremsscheibe der Bremse BC verbunden ist. Das Sonnenrad des Doppelplanetengetriebes 9 ist mittels des Vielzahnprofils 42 über eine weiter innenliegende Hohlwelle verbunden, die wiederum mittels eines Vielzahnprofils 38 mit der Bremsscheibe der Bremse BB verbunden ist. Der Planetenträger des Doppelplanetengetriebes 9 ist auf seiner rechten Seite auch wiederum mit einer Hohlwelle verbunden, die wiederum mittels des Vielzahnprofils 37 mit dem Kupplungsdeckel 6 verbunden ist. Das Hohlrad des Doppelplanetengetriebes 9 ist über einen topfförmigen Drehmomentträger mittels eines Vielzahnprofils 44 mit dem kleineren Sonnenrad des Ravigneaux-Planetengetriebes 10 verbunden.

Das Ravigneaux-Planetengetriebe 10 ist auch wiederum von topfförmigen Drehmomentträgern umgeben. Der äußere Drehmomentträger ist hier mittels eines Vielzahnprofils 46 sowohl mit den Bremsscheiben der Bremse BG, also auch mit der Kupplungssscheibe der Kupplung KGZ verbunden. Der innere Drehmomentträger des Ravigneaux-Planetengetriebes 10 ist sowohl mit seinem Hohlrad als auch über ein Vielzahnprofil 45 mit der Ausgangwelle 3 verbunden. Bei dem Ravigneaux-Planetengetriebe 10 gibt es die konstruktive Besonderheit, dass eine tellerförmige Erweiterung der Zentralwelle 2 mit dem rechten Ende der Planetenrädern - genauer gesagt mit deren Lagerbolzen - verbunden ist und diese Bolzen auch gleichzeitig mit einer stirnseitigen Platte (am linken Rand des Ravigneaux-Getriebes 10) verbunden sind. Diese stirnseitige Platte ist wiederum mit dem äußeren, topfförmigen Drehmomentträger verbunden. Der gesamte Bereich der erfindungsgemäßen Getriebeanordnung, in dem sich die Planetengetriebe befinden, wird durch eine Öl-Plansch-Schmierung geölt und gekühlt. Damit angrenzende, sogenannte trockene Bereiche nicht mit dem Öl in Berührung kommen, befinden sich dort Zwischenbleche 50 und 51. Diese Zwischenbleche sind gegenüber dem Gehäuse 1 - also einem ebenfalls ruhenden Teil - beispielsweise mittels eines O-Ringes abgedichtet. Zwischen den Zwischenblechen 50 und 51 und rotierenden Teilen (Wellen und Hohlwellen) ist jeweils ein Wellendichtring -beispielsweise als Lippendichtring ausgestaltet - vorhanden. Dieser Wellendichtring ist mit einem Pfeil gekennzeichnet, wobei die Pfeilrichtung die bevorzugte Sperrrichtung anzeigt.

Da die einzigen Zahnräder in dem erfindungsgemäßen Getriebe, in den Planetengetrieben 8, 9 und 10 sind,und diese Zahnräder zumindest eine Ölschmierung und -kühlung an ihren Zahnflanken benötigen, ist unterhalb der Planetengetriebe ein Ölraum angelegt, der bis zur Öl-Füllhöhe 63 mit Öl gefüllt ist. Durch das Eintauchen zumindest des Ravigneaux-Planetengetriebes 10 wird Öl aufgewirbelt, wodurch auch die anderen Planetengetriebe mit Öl benetzt werden. Da die Planetengetriebe von den topf- bzw. schalenförmigen Drehmomentträgern umhüllt sind, ist es vorteilhaft, wenn diese Drehmomentträger teilweise durchbrochen sind, damit das Öl besser an die Zahnflanken und die Lagerstellen gelangt.

Da bei erfindungsgemäßen Getriebeanordnung zwei Wellen, eine Vielzahl von Hohlwellen und schalen- bzw. topfförmigen Drehmomentträger ineinander geschachtelt sind und diese ineinander geschachtelten Bauteile eine Verbindung mit dem Ölraum 61 haben, kann es linksseitig von der Zwischenwand 50 bzw. rechtsseitig von der Zwischenwand 51 an den betreffenden Stellen zum Austreten von Öl kommen. Aus diesem Grunde sind dann dort Wellendichtringe angebracht.

Das Schalten der Gänge bei der erfindungsgemäßen Getriebeanordnung kann mit verschiedenen Vorrichtungen bewerkstelligt werden. In Verbindung mit der Kupplung KAG wurde bereits ein Ausrücksystem 5 beschrieben. Anstelle der Schwenkachse 52 und des Stellmotors 56 (hier mit Schneckengetriebe), kann auf der rechten Seite des Ausrücklagers 35 auch eine ortsfeste Auflage angeordnet sein, so dass zwischen dem Ausrücklager 35 und dieser ortsfesten Auflage ein Geberzylinder angeordnet werden kann, wie er beispielsweise aus automatisierten Getrieben mit einem elektronischen Kupplungsmanagement, bekannt ist. Die dazu gehörende hydraulische Strecke und der Geberzylinder könnten dann beispielsweise außerhalb des Gehäuses, dort wo genügend Platz ist, angeordnet sein.

Für die Kupplung KGZ und die Bremsen BB, BC, BD und BG wurden andere Wege beschritten. Bei der Bremse BB ist die Bremsscheibe zwischen zwei Druckplatten 21 und 22 positioniert. Die Druckplatte 22 ist fest mit dem Gehäuse 1 verschraubt. Die Druckplatte 21 ist axial verstellbar. Wird sie nach rechts gepresst, so wird die Bremsscheibe zwischen ihr und der Druckplatte 22 eingeklemmt. Die Bewegung der Druckplatte 21 wird durch einen Stellmotor 57 - in diesem Fall mit einem Kegelgetriebe - bewirkt, der eine Scheibe um die Zentralwelle 2 dreht. Diese Scheibe soll im Rahmen dieser Erfindung als Ringhebel 20 bezeichnet werden. Warum die Bezeichnung gewählt wurde, wird aus der nachfolgenden Beschreibung deutlich. Auf der rechten Seite des Ringhebel 20 befindet sich eine spiralförmige Kulisse 18, wobei diese Spirale mehrere Windungen einer Rille beinhaltet. In dieser "Schallplattenrille" befinden sich eine Vielzahl von Wanderkugeln 19. Der Ringhebel 20 ist selbst auch gegenüber dem Gehäuse 1 kugelgelagert. Wird nun über den Stellmotor 57 in der entsprechenden Richtung angetrieben, so bewegen sich die Wanderkugeln 19 entweder weiter nach innen (in Richtung Zentralwelle 2) oder weiter nach außen. Diese Wanderkugeln 19 wirken auf einen weiteren Hebel, der wiederum auf die Druckplatte 21 wirkt. Zwischen diesem Hebel und der Druckplatte 21 kann auch noch eine Verschleißeinstellung 11 angeordnet sein. Entscheidend ist bei diesem Lösungsansatz, dass die Wanderkugeln 19 Drehpunkte für ein Hebelsystem sind. Wenn die Wanderkugeln 19 auf eine radial weit innen liegende Position gebracht wurden, dann wirkt ein Energiespeicher 14 (beispielsweise als Tellerfeder ausgebildet) mit seiner Kraft auf einen entsprechend langen Hebelarm, so dass am kurzen Hebelarm eine hohe Kraft auf die Druckplatte 21 ausgeübt werden kann. Diese hohe Kraft führt wiederum dazu, dass die Bremse BB geschlossen wird. Um eine Drehbewegung der Druckplatte 21 zu verhindern und auch um der Druckplatte 21 eine Führung im nicht klemmenden Zustand zu geben, ist sie mit Druckplattenfedern 53 mit dem Gehäuse 1 verbunden.

Auch die Bremse BC wirkt auf die Druckplatte 22 ein, wenn sie geschlossen wird. Der Unterschied besteht lediglich darin, dass die Bremsscheibe der Bremse BC in diesem Fall nach links gepresst werden muss. Für das Pressen muss die Druckplatte 23 axial nach links verschoben werden. Damit sich die Druckplatte 23 nach links bewegen kann, muss mit einem Verstellmechanismus zwischen einem Widerlager 48 und der Druckplatte 23 eine Verstellung erfolgen. Diese Verstellung wird hier mittels eines Stellmotors 58 ausgeübt, der mittels eines Schneckengetriebes auf Wälzkörper einwirkt, die dann umfänglich verschoben werden können. Zwischen der Druckplatte 23 und den Wälzkörpern (vorzugsweise leicht kegelförmig) befindet sich außerdem noch ein Energiespeicher 15 und ein segmentierter Ringhebel 31. Dieses segmentierten Ringhebels 31 ist in einem kleinen Ausschnitt oberhalb der Hauptfigur dargestellt. Jeder einzelne segmentierte Ringhebel 31 ist mittels eines elastischen Steges 32 mit einem Haltering 33, verbunden. In dem Ausschnitt sind auch die Wälzkörper angedeutet, auf denen der segmentierte Ringhebel 31 abrollt, wobei sich hierbei wiederum ein Drehpunkt verändert, und dadurch auch wieder das Verhältnis von Last- zu Kraftarm verändert wird. Wird eine bestimmte Schwenksituation für die segmentierten Ringhebel erreicht, so kann der vorgespannte Energiespeicher 15 (ggf. als Tellerfeder ausgebildet) seine Spannkraft entfalten und hierbei die Druckplatte 23 an die Bremsscheibe der Bremse BC pressen.

Für die Betätigung der Bremse BD wird der Stellmotor 59 angetrieben. Der hierfür gezeigte Mechanismus entspricht dem für die Bremse BC und ist symmetrisch zum Widerlager 48. Deshalb kann hier auf eine weitere Beschreibung verzichtet werden.

Den Druckplatten 21, 22 und 23 ist in der Figur gemeinsam, dass sie mit Kühlwasserkanälen 65 ausgestattet sind. Hierbei ist eine Ausgestaltung der Kühlwasserkanäle 65 besonders vorteilhaft, bei der die Kanäle - bezogen auf die dargestellte Druckplattenbreite - mittig angeordnet sind und auch in Form von Kreissehnen den Druckplattenkörper durchdringen. Diese Kanäle können beispielsweise durch Bohren hergestellt werden. In einer stirnseitigen, zeichnerischen Ansicht stellen dann die Kanäle ein Vieleck dar, dessen Eckpunkte innerhalb der Kreisringfläche liegen. Die radial außen liegende Kanalanfänge werden dann entweder versiegelt - beispielsweise mittels einer verstemmten Kugel - oder als Zu- und Ablauf ausgebildet. Die Anschlüsse für den Zu- und den Ablaufes können in einem der Druckplatte nahen Bereich, als flexibel gestaltet werden - beispielsweise als Schlauch oder Wellrohr - und dann in einer starren Leitung weitergeführt werden. Vorteilhaft ist es dann, wenn der Zulauf und der Ablauf diametral angelegt werden, damit eine gute Durchspülung mit Kühlwasser möglich ist. Besonders vorteilhaft ist es, wenn hier sogar mehrere Zuläufe und mehrere Abläufe angelegt werden. Das Kühlwasser kann in einer weiteren Ausgestaltung der Erfindung aus dem Kühlkreislauf des Verbrennungsmotors bezogen werden. Aber auch eine separater Kühlkreislauf kann für die Druckplatten sinnvoll sein, wenn beispielsweise das Kraftfahrzeug mit einem StarterGenerator ausgestattet ist und bei seinem teilweise ausschließlichen Betrieb, die Kühleinrichtungen des Verbrennungsmotors nicht - oder nur ungenügend - zur Verfügung stehen.

Wiederum eine andere technische Lösung stellt der Bremsmechanismus für die Bremse BG bzw. für die Kupplung KGZ dar. Die Bremse BG besteht in diesem Beispiel aus insgesamt zwei Bremsscheiben. Diese sind erforderlich um das an ihr auftretende Bremsmoment sicher aufzufangen. Auf den ersten Blick ist es zunächst irritierend, dass auch die Bremsscheibe der Kupplung KGZ mit ihrem Vielzahlprofil 46 auf dem gleichen Bauteil - nämlich dem äußeren Drehmomentträger des Ravigneaux-Planetengetriebes 10 - angeordnet ist. Wenn man sich das Schaltzustandsdiagramm der Figur 9 anschaut, so stellt man fest, dass die Kupplung KGZ nur im fünften Gang benötigt wird. Die Bremse BG hingegen wird im Rückwärtsgang und im ersten Gang betätigt. Obwohl nun KGZ und die Bremse BG in unterschiedlichen Situationen geschaltet werden müssen - also nicht gleichzeitig - ist es mittels der Vorrichtung, die von dem Stellmotor 60 in Verbindung mit Schneckengetriebe angetrieben wird, möglich, beispielsweise die Bremse BG zu schließen (und damit die Kupplung KGZ zu öffnen), ohne eine Unterbrechung des Antriebsstranges oder einen Zwangszustand hervorzurufen.

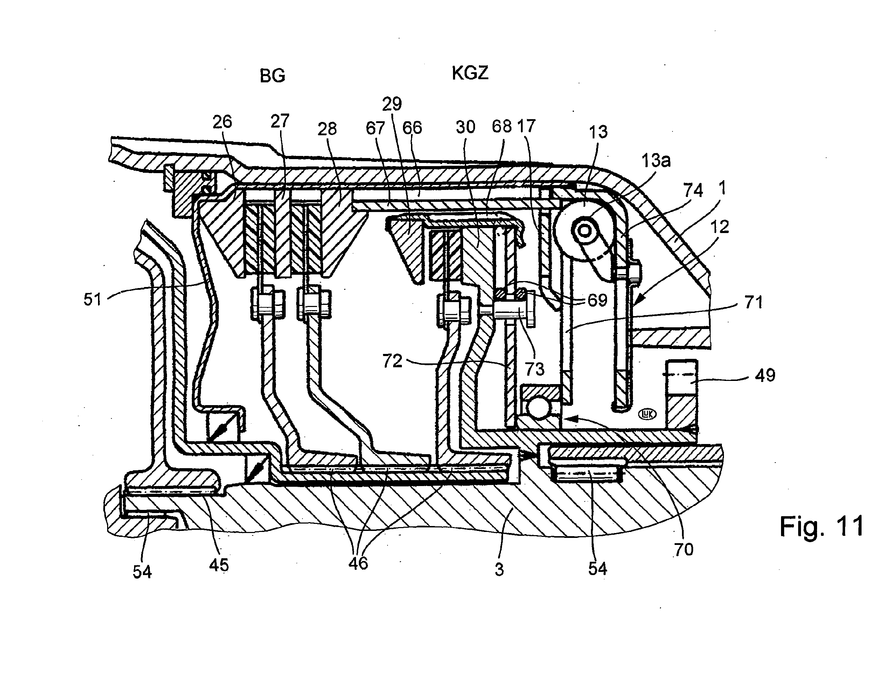

Um diesen Mechanismus deutlicher zeigen zu können, ist über diesen Bereich der Figur 10 eine Ausschnittsvergrößerung angefertigt worden, die mit der Figur 11 dargestellt wird. In dieser Figur sind die beiden Bremsscheiben der Bremse BG, die Kupplungsscheibe der Kupplung KGZ und die Druckplatten 26, 27, 28, 29 und 30, in ihrer Geometrie und ihrer Anordnung erneut zu sehen. Die Druckplatte 30 ist hier auch mit ihrer Verbindung zur Ausgangswelle 3 und zur Parksperre 49 zu sehen. Am linken Rand der Figur ist ein Drehmomentträger zu sehen, der mittels des Vielzahnprofils 45 mit der Ausgangswelle 3 drehfest verbunden ist. Dieser Drehmomentträger ist mit dem Sonnenrad des Ravigneaux-Planetengetriebes 10 verbunden. Die rechtsseitige Verlängerung des äußeren Drehmomentträgers des Ravigneaux-Planetengetriebes 10 ist mit dem Vielzahnprofil 46 versehen, welches in der schon beschriebenen Weise die Bremsscheiben der Bremsen BG und die Kupplungsscheibe der Kupplung KGZ drehfest koppelt.

Das Zwischenblech 51 geht in ein gezahntes, umfängliches Topfprofil 66 über. Dieses Topfprofil 66 kann beispielsweise nach seiner Herstellung mit dem Zwischenblech 51 verschweißt worden sein. Das Zwischenblech 51 und das Topfprofil 66 können aber auch vorteilhafterweise mittels Umformen (z.B. Tiefziehen) in einem Stück hergestellt werden. Das gezahnte Topfprofil 66 ist auch vorteilhaft, weil dadurch die Druckplatten 26, 27 und 28 durch ihre ebenfalls umfängliche, gezahnte Profilierung sich in dem Topfprofil 66 abstützen können. Ist das Gehäuse 1 in dem Bereich, der dem Topfprofil 66 zugewandt ist, ebenfalls profiliert, so können sich die Reaktionskräfte der Bremse BG am Gehäuse 1 abstützen.

Das entscheidende der Figur 11 ist der Mechanismus, mit dem alternierend zwischen einer geschlossenen Bremse BG und einer geschlossenen Kupplung KGZ hin- und hergeschaltet werden kann. Das Umschalten erfolgt mittels einer Kulisse 12, die mehrere Spiralsegmente aufweist. Die Anordnung der Segmente kann in einem Ausschnitt der Figur 10 entnommen werden. Eine rechte, stirnseitige Wand 74 ist beispielsweise mit dem Topfprofils 66 verschweisst. In dieser Wand befinden sich beispielsweise radiale Schlitze, in denen ein Zapfen für einen Führungsschlitten einer Laufrolle 13 gleiten kann. Die Laufrolle 13 stützt sich hierbei auf der Innenseite der Wand 74 ab. In einem ringförmigen Hebel 71 sind ebenfalls schlitze angebracht, so das die Laufrolle 13 in diesen Schlitzen eintauchen kann. Zwischen der Laufrolle 13 und ihrer Achse 13a ist vorzugsweise ein Nadellager angeordnet. Dieses ist vorteilhaft, weil die Achse 13a - die breiter ist als die Laufrolle 13 - auf der Außenseite des Hebels 71 abrollen kann, ohne dass Relativdrehbewegungen der Laufrolle 13 zu der Achse 13a behindert werden.

Ein Energiespeicher 17 - der hier als Tellerfeder ausgebildet ist - rastet mit seinem äußeren Ende in das gezahnte Topfprofil 66 ein. Das innere Ende des Energiespeichers 17 ist abgewinkelt und durch die Vorspannung des Energiespeichers 17 drückt dieses Ende auf den Hebel 71. Der äußere und der innere Umfang des Energiespeichers 17 sind mit einer Vielzahl von Schlitzen umgeben. Solange die Laufrolle 13 sich radial außen befindet, so wird mittels einer Hülse 67 auf die Druckplatten 26, 27, 28 und die dazwischen liegenden Bremsscheiben gedrückt. Die Bremse BG ist dann geschlossen.

Wird nun die Laufrolle 13 mittels der Kulisse12 und dem Stellmotor 60 (siehe Figur 10), der über eine Schnecke/Schneckenrad-Verbindung zur Kulisse 12 verfügt, zur Ausgangswelle 3 hin bewegt, so wird zum einem die Presskraft auf die Bremse BG allmählich reduziert und zugleich durch den Hebel 71 allmählich eine Kraft auf das axial verschiebbare Rillenkugellager erhöht, wodurch wiederum auf einen ebenfalls ringförmigen Hebel 72 die Schließkraft für die Kupplung KGZ entsprechend erhöht wird. Der Hebel 72 ist mittels zweier wechselseitig angeordneter und von Stehbolzen 73 geführten Drahtringen 69 gelagert.

Der Hebel 72 greift in eine im wesentlichen ringförmige Klammer 68 ein. Der linke Rand dieser Klammer 68 umschließt die Druckplatte 29. Der rechte Rand ist in axialer Richtung gestuft ausgeführt, so dass ein innerer rechter Rand den rechten Rand der Druckplatte 30 umfasst. In den äußeren rechten Rand der Klammer 68 greift das radial äußere Ende des Hebels 72 ein. Neigt sich dieses Ende nun nach rechts - bedingt durch die Bewegung der Laufrolle 13 hin zur Ausgangswelle 3 - so nähern sich die Druckplatten 29, 30 allmählich einander an und die Druckplatten 26 bis 28 werden entlastet. Je mehr dann die Laufrolle 13 radial nach innen verschoben wird - also deutlich über den Punkt hinaus, an dem das abgewinkelte Ende des Energiespeichers am Hebel 71 anliegt - desto stärker kommt es zur Entlastung der Bremse BG und zum Schließen der Kupplung KGZ.

Wird mittels der oben beschriebenen Mechanik, die Laufrolle 13 radial nach außen bewegt, so kehrt sich der Bewegungsablauf um und statt der Kupplung KGZ ist dann wieder die Bremse BG geschlossen. Der Mechanismus für die Bremse BG und die Kupplung KGZ ist eine mechanische Realisierung einer EXOR-Verknüpfung mit einem fließenden Übergang. Die Konstruktion ist zusätzlich auch insofern sehr vorteilhaft, weil hier mit nur einem Stellmotor 60 gleich zwei Schaltelemente (Kupplung KGZ und Bremse BG) bedient werden können. Dieses lässt sich in der vorliegenden Konstruktion aber nur anwenden, weil KGZ und BG nie gleichzeitig betätigt sein müssen.

Wie schon der Figur 10 im Zusammenhang mit Kupplung KGZ erwähnt wurde, ist das Ausrücken des Ausrücklagers 35 mittels eines Stellmotors 56 oder mittels eines Nehmerzylinders in Verbindung mit einer Steuerungseinheit sehr vorteilhaft. Besonders ist es nun, wenn alle Stellmotoren 56 - 60 von einer gemeinsamen Steuerung und einem gemeinsamen Programm gesteuert werden. Dadurch lassen sich Schaltpunkte für die Gänge, das Schaltverhalten des Getriebes insgesamt (sportlich, defensiv), mit Zugkraftunterbrechung - oder ohne, und viele weitere Parameter allein durch Programme beeinflussen.

## Patentansprüche

1. Getriebeanordnung, insbesondere für Kraftfahrzeuge, wobei die Getriebeanordnung mit mindestens einem Planetensatz (8,9,10) und mit mindestens einer trockenen Kupplung (KAG, KGZ) und/oder einer trockenen Getriebe-Bremse (BB,BC,BD,BG) versehen ist und wobei die trockene Kupplung (KAG,KGZ) oder die trockene Bremse (BB, BC, BD, BG) mittels einer elektromotorisch angetriebenen Mechanik betätigt wird, **dadurch gekennzeichnet, dass** diese Mechanik aus mehreren Hebelmechaniken besteht, die zur Zentralwelle (2) bzw. zur Ausgangswelle (3) radial angeordnet sind, wobei durch einen Elektromotor (57,60) eine Kulisse (12,18) um die Drehachse der Zentralwelle (2) bzw. Ausgangswelle (3) geschwenkt wird, wobei hierdurch der Drehpunkt der Hebelmechaniken radial verlagert wird und **dadurch** zugleich das Verhältnis der Last- zu den Kraft-Hebelarmen verändert wird.

2. Getriebeanordnung nach Anspruch 1 **dadurch gekennzeichnet, dass** mindestens eine Kupplung (KAG, KGZ) oder Bremse (BB, BC, BD, BG) in Wirkverbindung mit einer elektronischen Steuerung steht und von dieser betätigt wird.

3. Getriebeanordnung nach Anspruch 1 oder 2, **dadurch gekennzeichnet, dass** mindestens ein Planetensatz (8, 9, 10) einem bodenseitigen Ölbad zugeordnet ist und dieser Planetensatz (8, 9,10) mittels einer Plansch-Ölschmierung geschmiert und/oder gekühlt wird.

4. Getriebeanordnung nach einem der Ansprüche 1 bis 3, **dadurch gekennzeichnet, dass** die Steuerung der Schaltvorgänge ohne einen Ölkreislauf bewerkstelligt wird.

5. Getriebeanordnung nach Anspruch 1, **dadurch gekennzeichnet, dass** die Kulisse (12, 18) mit Schlitzen versehen ist, die Spiralsegmente darstellen.

6. Getriebeanordnung nach Anspruch 1, **dadurch gekennzeichnet, dass** die Kulisse (12,18) mit einer Nut versehen ist, die spiralförmig ausgebildet ist und mehrere Voll-kreise beschreibt.

7. Getriebeanordnung nach Anspruch 1, **dadurch gekennzeichnet, dass** die Mechanik aus mehreren Hebelmechaniken besteht, die zur Zentralwelle bzw. zur Ausgangswelle ringförmig angeordnet sind, wobei durch den Elektromotor ein Haltering (33) um die Drehachse der Zentralwelle (2) bzw. Ausgangswelle (3) geschwenkt wird, wobei hierdurch der Drehpunkt der Hebelmechaniken umfänglich verlagert wird und **dadurch** zugleich das Verhältnis der Last- zu den Kraft-Hebelarmen verändert wird.

8. Getriebeanordnung nach Anspruch 1, **dadurch gekennzeichnet, dass** die Mechanik aus einem Schwenkhebel besteht, dessen Achse im wesentlichen senkrecht zur Zentralwelle steht und von einem Elektromotor mittels eines Schneckengetriebes angetrieben wird, wobei ein an der Achse angeordneter Exzenter auf ein Ausrücklager (70) drückt.

9. Getriebeanordnung nach Anspruch 1, **dadurch gekennzeichnet, dass** die Mechanik einem elektromotorisch angetrieben Geberzylinder, einer hydraulisches Strecke und einem Nehmerzylinder besteht, wobei auf der Wirkseite des Nehmerzylinders ein Ausrücklager angeordnet ist.

10. Getriebeanordnung nach Anspruch 8 oder 9, **dadurch gekennzeichnet, dass** das Ausrücklager einer Kupplung zugeordnet ist.

11. Getriebeanordnung nach einem der Ansprüche 1 bis 10, **dadurch gekennzeichnet, dass** sieben Vorwärtsgänge mittels dreier Planetensätze (8, 9, 10) realisiert sind.

12. Getriebeanordnung nach Anspruch 11, **dadurch gekennzeichnet, dass** - von der Motorseite zur Abtriebsseite betrachtet- zunächst ein einfacher Planetensatz, dann ein doppelter Planetensatz und schließlich ein Ravigneauxsatz angeordnet sind.

13. Getriebeanordnung nach Anspruch 11 oder 12, **dadurch gekennzeichnet, dass** die Planetensätze zueinander benachbart sind, wodurch diese Planetensätze nur einen, gemeinsamen Ölraum (61) für die Plansch-Ölschmierung bilden.

14. Getriebeanordnung nach einem der Ansprüche 1 bis 13, **dadurch gekennzeichnet, dass** die Zentralwelle nur in der Ausgangswelle und in der Kurbelwelle eines Verbrennungsmotors gelagert ist.

15. Getriebeanordnung nach Anspruch 14, **dadurch gekennzeichnet, dass** vor der Montage der Getriebevorrichtung mit dem Verbrennungsmotor, das verbrennungsmotorseitige Ende der Zentralwelle mittels einer geschlossenen Bremse gehalten wird.

16. Getriebeanordnung nach einem der Ansprüche 1 is 15, **dadurch gekennzeichnet, dass** mindestens eine der Bremsen (BB, BC, BD, BG) mit einer Wasserkühlung versehen ist.

17. Getriebeanordnung nach Anspruch 16, **dadurch gekennzeichnet, dass** die Wasserkühlung an dem Kühlwasserkreislauf des Verbrennungsmotors angeschlossen ist.

18. Getriebeanordnung nach Anspruch 16, **dadurch gekennzeichnet, dass** die Wasserkühlung an einen separaten Kühlwasserkreislauf angeschlossen ist.

19. Getriebeanordnung nach einem der Ansprüche 1 bis 18, **dadurch gekennzeichnet, dass** ein Zweimassenschwungrad (ZMS) in dem Kraftfluss zwischen Verbrennungsmotor und der Zentralwelle (2) angeordnet ist.

20. Getriebeanordnung nach einem der Ansprüche 1 bis 19, **dadurch gekennzeichnet, dass** eine Kupplung (KAG) in dem Kraftfluss zwischen Verbrennungsmotor und Zentralwelle (2) angeordnet ist, wobei der Kupplungsdeckel mit einer innersten Hohlwelle und die Kupplungsscheibe mit der Zentralwelle (2) drehfest verbunden ist.

## Claims

1. Transmission arrangement, in particular for motor vehicles, the transmission arrangement being provided with at least one planet set (8, 9, 10) and with at least one dry clutch (KAG, KGZ) and/or a dry transmission brake (BB, BC, BD, BG), and the dry clutch (KAG, KGZ) or the dry brake (BB, BC, BD, BG) being actuated by means of an electromotively driven mechanism, **characterized in that** this mechanism consists of a plurality of lever mechanisms which are arranged radially with respect to the central shaft (2) or to the output shaft (3), a rocker link (12, 18) being pivoted about the axis of rotation of the central shaft (2) or output shaft (3) by means of an electric motor (57, 60), the centre of rotation of the lever mechanisms thereby being displaced radially and, at the same time, the ratio of the load lever arms to the force lever arms being varied as a result.

2. Transmission arrangement according to Claim 1, **characterized in that** at least one clutch (KAG, KGZ) or brake (BB, BC, BD, BG) is operatively connected to an electronic control and is actuated by the latter.

3. Transmission arrangement according to Claim 1 or 2, **characterized in that** at least one planet set (8, 9, 10) is assigned to a bottom-side oil bath, and this planet set (8, 9, 10) is lubricated and/or cooled by means of Plansch oil lubrication.

4. Transmission arrangement according to one of Claims 1 to 3, **characterized in that** the control of the shift operations is implemented without an oil circuit.

5. Transmission arrangement according to Claim 1, **characterized in that** the rocker link (12, 18) is provided with slots which form spiral segments.

6. Transmission arrangement according to Claim 1, **characterized in that** the rocker link (12, 18) is provided with a groove which is of spiral design and which describes a plurality of full circles.

7. Transmission arrangement according to Claim 1, **characterized in that** the mechanism consists of a plurality of lever mechanisms which are arranged annularly with respect to the central shaft or to the output shaft, a holding ring (33) being pivoted about the axis of rotation of the central shaft (2) or output shaft (3) by means of the electric motor, the centre of rotation of the lever mechanisms thereby being displaced circumferentially, and, at the same time, the ratio of the load lever arms to the force lever arms being varied as a result.

8. Transmission arrangement according to Claim 1, **characterized in that** the mechanism consists of a pivoting lever, the axis of which stands essentially perpendicularly with respect to the central shaft and is driven by an electric motor by means of a worm gear, an eccentric arranged on the axis pressing onto a disengaging bearing (70).

9. Transmission arrangement according to Claim 1, **characterized in that** the mechanism consists of an electromotively driven master cylinder, of a hydraulic stage and of a slave cylinder, a disengaging bearing being arranged on the operative side of the slave cylinder.

10. Transmission arrangement according to Claim 8 or 9, **characterized in that** the disengaging bearing is assigned to a clutch.

11. Transmission arrangement according to one of Claims 1 to 10, **characterized in that** seven forward gears are implemented by means of three planet sets (8, 9, 10).

12. Transmission arrangement according to Claim 11, **characterized in that**, as seen from the engine side to the output side, first a single planet set, then a double planet set and finally a wrapping Ravigneaux set are arranged.

13. Transmission arrangement according to Claim 11 or 12, **characterized in that** the planet sets are adjacent to one another, with the result that these planet sets form only one common oil space (61) for the Plansch oil lubrication.

14. Transmission arrangement according to one of Claims 1 to 13, **characterized in that** the central shaft is mounted only in the output shaft and in the crankshaft of an internal combustion engine.

15. Transmission arrangement according to Claim 14, **characterized in that**, before the transmission device is assembled together with the internal combustion engine, that end of the central shaft which is located on the internal combustion engine side is held by means of a closed brake.

16. Transmission arrangement according to one of Claims 1 to 15, **characterized in that** at least one of the brakes (BB, BC, BD, BG) is provided with a water cooling.

17. Transmission arrangement according to Claim 16, **characterized in that** the water cooling is connected to the cooling-water circuit of the internal combustion engine.

18. Transmission arrangement according to Claim 16, **characterized in that** the water cooling is connected to a separate cooling-water circuit.

19. Transmission arrangement according to one of Claims 1 to 18, **characterized in that** a two mass flywheel (ZMS) is arranged in the force flux between the internal combustion engine and the central shaft (2).

20. Transmission arrangement according to one of Claims 1 to 19, **characterized in that** a clutch (KAG) is arranged in the force flux between the internal combustion engine and the central shaft (2), the clutch cover being connected fixedly into a rotation to an innermost hollow shaft, and the clutch disc being connected fixedly into a rotation to the central shaft (2).

## Revendications

1. Ensemble de transmission, notamment pour véhicules automobiles, l'ensemble de transmission étant pourvu d'au moins un train planétaire (8, 9, 10) et d'au moins un embrayage (KAG, KGZ) sec et/ou d'un frein sur transmission (BB, BC, BD, BG) sec et l'embrayage (KAG, KGZ) sec ou le frein (BB, BC, BD, BG) sec étant actionnés à l'aide d'un mécanisme à entraînement électromotorisé, **caractérisé en ce que** ce mécanisme se compose de plusieurs mécanismes de levier disposés radialement par rapport à l'arbre central (2) et/ou à l'arbre de sortie (3), une coulisse (12, 18) étant pivotée par un moteur électrique (57, 60) autour de l'axe de rotation de l'arbre central (2) et/ou de l'arbre de sortie (3), le point de rotation des mécanismes de levier étant ainsi déplacés dans le plan radial et modifiant ainsi en même temps le rapport entre les bras de levier de charge et les bras de levier de force.

2. Ensemble de transmission selon la revendication 1, **caractérisé en ce qu'**au moins un embrayage (KAG, KGZ) ou un frein (BB, BC, BD, BG) sont commandés électroniquement par relation d'effet au moyen d'une commande électronique puis actionnés par elle.

3. Ensemble de transmission selon la revendication 1 ou 2, **caractérisé en ce qu'**au moins un train planétaire (8, 9, 10) est associé à un bain d'huile du côté du fond et que ce train planétaire (8, 9, 10) est lubrifié et/ou refroidi à l'aide d'une lubrification de surface.

4. Ensemble de transmission selon l'une quelconque des revendications 1 à 3, **caractérisé en ce que** la commande des changements de vitesse à une vitesse supérieure peut être réalisée sans circuit d'huile.

5. Ensemble de transmission selon la revendication 1, **caractérisé en ce que** la coulisse (12, 18) est pourvue de fentes représentant des segments en spirale.

6. Ensemble de transmission selon la revendication 1, **caractérisé en ce que** la coulisse (12, 18) est pourvue d'une rainure prenant une forme en spirale et décrivant plusieurs cercles entiers.

7. Ensemble de transmission selon la revendication 1, **caractérisé en ce que** le mécanisme se compose de plusieurs mécanismes de levier disposés en cercle par rapport à l'arbre central et/ou à l'arbre de sortie, une bague de maintien (33) étant pivotée par le moteur électrique autour de l'axe de rotation de l'arbre central (2) et/ou de l'arbre de sortie (3), le point de rotation des mécanismes de levier étant ainsi déplacé sur la périphérie et modifiant en même temps le rapport entre les bras de levier de charge et les bras de levier de force.

8. Ensemble de transmission selon la revendication 1, **caractérisé en ce que** le mécanisme se compose d'un levier pivotant dont l'axe est pour l'essentiel perpendiculaire à l'arbre central et est entraîné par un moteur électrique à l'aide d'un engrenage à vis sans fin, un excentre disposé contre l'axe appuyant sur un palier de débrayage (70).

9. Ensemble de transmission selon la revendication 1, **caractérisé en ce que** le mécanisme se compose d'un cylindre émetteur entraîné de façon électromotisée, d'une course hydraulique et d'un cylindre récepteur, un palier de débrayage étant disposé sur la face active du cylindre récepteur.

10. Ensemble de transmission selon la revendication 8 ou 9, **caractérisé en ce que** le palier de débrayage est associé à un embrayage.

11. Ensemble de transmission selon l'une quelconque des revendications 1 à 10, **caractérisé en ce que** sept vitesses en marche avant sont réalisées à l'aide de trois trains planétaires (8, 9, 10).

12. Ensemble de transmission selon la revendication 11, **caractérisé en ce que** - vu du côté du moteur en direction du côté d'entraînement de sortie - on a d'abord un train planétaire simple puis un double train planétaire et pour finir un train de Ravigneaux.

13. Ensemble de transmission selon la revendication 11 ou 12, **caractérisé en ce que** les trains planétaires sont placés à proximité les uns des autres, ces trains planétaires ne formant qu'un espace d'huile (61) commun pour la lubrification de surface.

14. Ensemble de transmission selon l'une quelconque des revendications 1 à 13, **caractérisé en ce que** l'arbre central n'est disposé que dans l'arbre de sortie et dans le vilebrequin d'un moteur à combustion interne.

15. Ensemble de transmission selon la revendication 14, **caractérisé en ce qu'**avant le montage du dispositif d'engrenage avec le moteur à combustion interne, l'extrémité de l'arbre central située du côté du moteur à combustion interne est maintenue à l'aide d'un frein serré.

16. Ensemble de transmission selon l'une quelconque des revendications 1 à 15, **caractérisé en ce qu'**au moins un des freins (BB, BC, BD, BG) est pourvu d'un refroidissement d'eau.

17. Ensemble de transmission selon la revendication 16, **caractérisé en ce que** le refroidissement d'eau est raccordé au circuit d'eau de refroidissement du moteur à combustion interne.

18. Ensemble de transmission selon la revendication 16, **caractérisé en ce que** le refroidissement d'eau est raccordé à un circuit d'eau de refroidissement séparé.

19. Ensemble de transmission selon l'une quelconque des revendications 1 à 18, **caractérisé en ce qu'**un volant à double masse (ZMS) est disposé dans le flux de forces circulant entre le moteur à combustion interne et l'arbre central (2).

20. Ensemble de transmission selon l'une quelconque des revendications 1 à 19, **caractérisé en ce qu'**un embrayage (KAG) est disposé dans le flux de forces circulant entre le moteur à combustion interne et l'arbre central (2), le cache d'embrayage étant relié fixement en rotation à un arbre creux situé le plus à l'intérieur possible et le disque d'embrayage étant relié fixement en rotation à l'arbre central (2).
